# EUROPEAN PATENT SPECIFICATION

(11) **EP 4 414 196 B1**
(45) Date of publication and mention of the grant of the patent: **25.03.2026**
(21) Application number: 24154872.6
(22) Date of filing: 31.01.2024
(51) Int. Cl.: B60K 6/38, B60K 6/387, B60K 6/48, B60W 10/02, B60W 10/06, B60W 10/08, B60W 10/24, B60W 20/11, B60W 20/13, B60W 20/19, B60W 20/40, B60W 30/192, B60W 40/105, F02N 13/00, B60W 50/00

(54) **VEHICLE DRIVING SYSTEM, VEHICLE, AND METHOD OF CONTROLLING DRIVING SYSTEM**
FAHRZEUGANTRIEBSSYSTEM, FAHRZEUG UND VERFAHREN ZUR STEUERUNG DES ANTRIEBSSYSTEMS
SYSTÈME D'ENTRAÎNEMENT DE VÉHICULE, VÉHICULE ET PROCÉDÉ DE COMMANDE DE SYSTÈME D'ENTRAÎNEMENT

(30) Priority: 09.02.2023 JP 2023018645
(43) Date of publication of application: 14.08.2024
(73) Proprietor: MAZDA MOTOR CORPORATION, Hiroshima 730-8670 (JP)
(72) Inventor: OHASHI, Mikinori, Aki-gun, Hiroshima (JP); TAGA, Junichi, Aki-gun, Hiroshima (JP); WATANABE, Satoshi, Aki-gun, Hiroshima (JP); HIKICHI, Yuki, Aki-gun, Hiroshima (JP)
(74) Representative: Müller-Boré & Partner Patentanwälte PartG mbB

(56) References cited:
- US-A1- 2020 298 817
- US-A1- 2022 111 719
- US-B2- 7 536 994
- US-B2- 8 712 613

## Description

### TECHNICAL FIELD

The present invention relates to a driving system for a vehicle which uses both an engine and a motor. The present invention also relates to a vehicle and a method of controlling a driving system.

### BACKGROUND

Vehicles which use both an internal combustion engine and an electric motor as power sources (i.e., hybrid vehicles) are known. As a kind of hybrid vehicles, vehicles which are able to change between an engine travel mode in which at least a portion of power is provided from the engine, and a motor travel mode in which all the power is provided from the motor exist. In such a hybrid vehicle, upon a change in the travel mode, a control in which the engine is stopped, or a control in which the stopped engine is restarted, is performed.

For example, JP2018-030507A discloses connecting the engine with the motor (or the motor generator) via a clutch while starting the engine, when changing from the motor travel mode (EV travel mode) to the engine travel mode (HV mode). Concretely, in JP2018-030507A, a control in which a mixture gas is ignited to increase an engine speed, and a control in which the clutch is filled with hydraulic fluid to connect the clutch are performed in this order, when changing to the engine travel mode.

When the clutch is connected after igniting the mixture gas and performing combustion like in JP2018-030507A, it takes a comparatively long period of time after combustion of the mixture gas is started until the clutch is connected to make the engine function as a power source. This lengthens a period of time for changing from the motor travel mode to the engine travel mode, which may become a factor in worsening the acceleration response. Further, if the connection timing of the clutch is recklessly brought forward (i.e., earlier) in order to avoid this problem, a comparatively large shock may be caused on the vehicle, for example, due to the clutch being connected while the engine speed difference is large.

US 8 712 613 B2 describes a control device controlling a hybrid vehicle drive apparatus that includes an internal combustion engine, a rotary electric machine drivingly connected to a wheel and a clutch selectively drivingly connecting the internal combustion engine with the rotary electric machine.

US 2020/298817 A1 describes that a controller for a hybrid vehicle restarts an engine in a start mode selected from multiple start modes. The multiple start modes include a first start mode of starting combustion in the engine when a clutch starts transmitting torque and a second start mode of starting combustion in the engine after the clutch starts transmitting torque.

### SUMMARY

Thus, the present invention is made in view of the above situations, and one purpose thereof is to provide a driving system for a vehicle, which is capable of reducing a vehicle shock and improving an acceleration response, when changing to an engine travel mode.

The above-described problems are solved by the invention as defined in claims 1 and 10.

There is a lag time after fuel is injected until the fuel actually combusts and the engine actually rotates, and there is also a lag time after the clutch reaches the connection initial state until the clutch results in a full connection. In consideration of the lag times, in the present invention, when the connection initial state of the clutch is confirmed, fuel is injected at this timing. Thus, it is possible to fully connect the clutch within a period in which the engine is rotated by the combustion energy. Therefore, the torque transmitted to the engine from the motor via the clutch can be superimposed on the torque by the combustion energy so that the engine speed can be raised promptly. As a result, a period of time required for completing the startup of the engine (complete combustion) can be shortened so that the acceleration response when changing to the engine travel mode can be improved. Further, by fully connecting the clutch during the rotation of the engine, a large vehicle shock can be suppressed from being generated accompanying the full connection.

In the present invention, the connection initial state is a state where a clearance between clutch plates of the clutch becomes substantially zero. Therefore, fuel is injected at the timing when the clearance between the clutch plates becomes substantially zero. Thus, the timing when subsequently the clutch hydraulic pressure rises and the clutch results in the full connection can be suitably within the period when the engine rotates by the combustion energy.

The engine may further include a spark plug configured to ignite a mixture gas containing fuel injected from the fuel injection valve, and air. In a startup of the engine, the controller may cause the spark plug to ignite the mixture gas after a predetermined period of time passes from the fuel injection by the fuel injection valve.

According to this aspect, ignition of the mixture gas can be performed at the timing when the injected fuel is fully mixed with air so that the mixture gas can be combusted suitably.

The fuel injection valve may be one of a plurality of fuel injection valves and the spark plug may be one of a plurality of spark plugs. The engine may include a plurality of cylinders, each provided with a respective one of each plurality of fuel injection valves and spark plugs. In the startup of the engine, the controller may cause, in a stop-period expansion-stroke cylinder which is one of the cylinders and stopped in expansion stroke, the fuel injection valve to perform the fuel injection and the spark plug to perform ignition first before the other cylinders.

According to this aspect, by performing the first combustion in the stop-period expansion-stroke cylinder to depress the piston of that cylinder, the rotational force can be promptly given to the engine.

In the stop-period expansion-stroke cylinder, the controller may cause the fuel injection valve to perform a plurality of fuel injections and then cause the spark plug to perform a plurality of ignitions.

According to this aspect, uncompressed mixture gas which is formed inside the stop-period expansion-stroke cylinder can be combusted without difficulty. That is, by the plurality of fuel injections repeatedly stirring air inside the combustion chamber, mixing of fuel with air is stimulated. Therefore, the mixture gas in which fuel is fully mixed with air is formed inside the combustion chamber. Further, by performing the plurality of ignitions to the formed mixture gas, the ignitability of the mixture gas can be improved to combust a great portion of the mixture gas precisely.

### BRIEF DESCRIPTION OF DRAWINGS

Fig. 1 is a system diagram illustrating an outline configuration of a vehicle to which a drive system according to one embodiment of the present invention is applied.
Fig. 2 is an outline cross-sectional view illustrating a structure of an engine.
Fig. 3 is a functional block diagram illustrating a control system of the vehicle.
Fig. 4 is a flowchart illustrating contents of an automatic stop control of the engine, which is performed in association with a change from an engine travel mode to a motor travel mode.
Fig. 5 is a view illustrating a suitable example of a piston position when the engine is completely stopped.
Fig. 6 is a flowchart illustrating contents of a restart control of the engine, which is performed in association with a change from the motor travel mode to the engine travel mode.
Fig. 7 is a time chart illustrating one example of a time-series change in various properties accompanying the restart control of the engine.

### DETAILED DESCRIPTION

### [Overall Configuration of Vehicle]

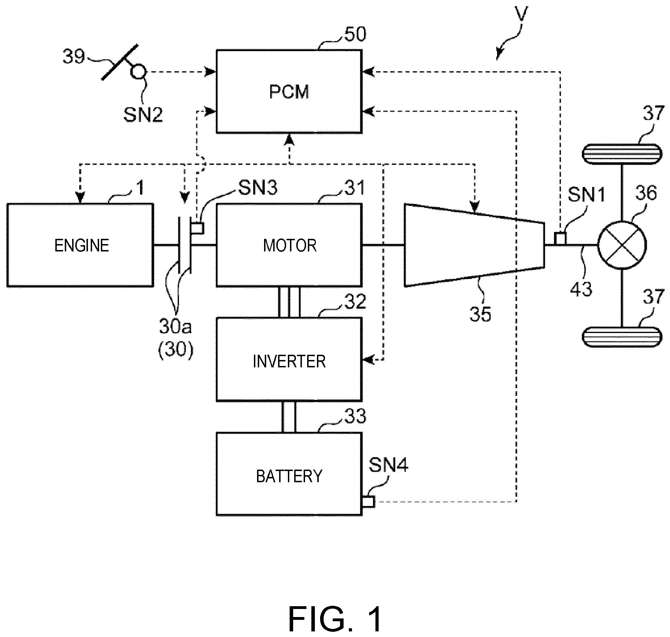

Fig. 1 is a system diagram illustrating an outline configuration of a vehicle V to which a drive system according to one embodiment of the present invention is applied. As illustrated in this drawing, the vehicle V includes an engine 1, a clutch 30, a motor 31, an inverter 32, a battery 33, a transmission 35, a differential gear 36, driving wheels 37, and a PCM (Powertrain Control Module) 50. The engine 1 and the motor 31 are both capable of driving the driving wheels 37 (wheels) as a power source for traveling. That is, the vehicle V of this embodiment is a hybrid vehicle which uses both the engine 1 and the motor 31 as power sources.

The engine 1 is an internal combustion engine which generates output by combustion of fuel. In this embodiment, a four-cycle gasoline engine using fuel of which the main component is gasoline (gasoline fuel) may be used as the engine 1. The details of the engine 1 will be described later.

The motor 31 may be a motor generator having a combination of a function as a motor and a function as a power generator. For example, the motor 31 is comprised of a three-phase alternating current synchronous electric motor. The motor 31 operates as a motor when the vehicle V accelerates to generate a driving force for rotating the driving wheels 37. Further, the motor 31 may operate as a generator when the vehicle V slows down to generate power while receiving a rotational force (torque) transmitted from the driving wheels 37.

The inverter 32 may be a transducer which converts the power from alternate current (AC) to direct current (DC), and vice versa. When the motor 31 operates as a generator, the inverter 32 converts AC power generated by the motor 31 into DC power, and then supplies it to the battery 33. On the other hand, when the motor 31 operates as a motor, the inverter 32 converts DC power stored in the battery 33 into AC power, and then supplies it to the motor 31. Further, the inverter 32 may have a function to adjust the output or the production of electricity from the motor 31 via an electric power transfer control between the motor 31 and the battery 33.

The battery 33 is a rechargeable battery which is chargeable and dischargeable. For example, the battery 33 may be comprised of a lithium-ion battery or a nickel-hydrogen battery. The battery 33 supplies driving power to the motor 31 via the inverter 32, and accepts power generated by the motor 31 via the inverter 32 and stores the power therein.

A battery sensor SN4 which detects input current and output current into/from the battery 33 may be attached to the battery 33. A current value detected by the battery sensor SN4 is used for determining a battery SOC (state of charge), i.e., the present percentage of the charged amount with respect to the fully charged amount of the battery 33. In other words, the battery sensor SN4 may be a sensor for detecting the battery SOC. Concretely, the PCM 50 calculates a charged amount and a discharged amount of the battery 33 per unit time based on the detection value of the battery sensor SN4, and calculates the battery SOC by integrating the charged amount and the discharged amount.

The clutch 30 is a clutch which connects the engine 1 to the motor 31 and/or disconnects the engine 1 from the motor 31. That is, the clutch 30 connects an output shaft (a crankshaft 7 described later) of the engine 1 to a rotation shaft (rotor shaft) of the motor 31 in series, and/or cancels the connection (disconnection).

The clutch 30 may include a pair of clutch plates 30a which oppose to each other in the axial direction. That is, the clutch 30 is displaceable between a connected state in which the clutch plates 30a are pressed against each other, and a disconnected state in which the clutch plates 30a are separated from each other. When the clutch 30 is connected or engaged to connect the engine 1 to the motor 31, torque from both the engine 1 and the motor 31 are transmitted to the driving wheels 37 via the transmission 35 and the differential gear 36. On the other hand, when the clutch 30 is disconnected or disengaged to disconnect the motor 31 from the engine 1, only the torque from the motor 31 is transmitted to the driving wheels 37.

Connection and/or disconnection of the clutch 30 are performed through a control of hydraulic pressure supplied from a hydraulic pressure supply device (not illustrated). That is, when connecting the clutch 30, hydraulic pressure which acts on the clutch plate 30a (i.e., clutch hydraulic pressure) is increased to press the clutch plates 30a against each other, and, when disconnecting the clutch 30, the clutch hydraulic pressure is reduced to cancel the pressure contact of the clutch plates 30a. Further, a hydraulic pressure sensor SN3 which detects the clutch hydraulic pressure is provided to the clutch 30. Note that the hydraulic pressure sensor SN3 is an example of a "hydraulic pressure sensor" in the present invention.

The transmission 35 may change the speed of the rotation inputted from the engine 1 and the motor 31 and outputs it to the differential gear 36. In this embodiment, the transmission 35 may be an automatic transmission, in which the gear ratio is automatically changed according to e.g., a traveling speed and/or an engine speed. The differential gear 36 distributes the rotation inputted from the transmission 35 to the left and right driving wheels 37.

A speed sensor SN1 for identifying the traveling speed of the vehicle V (i.e., vehicle speed) may be attached to the transmission 35. Concretely, the speed sensor SN1 detects a rotational speed of an output shaft 43 of the transmission 35, and identifies the traveling speed based on the detection value.

An accelerator pedal 39 which is to be stepped on and depressed by a vehicle operator (driver) is provided to the vehicle V. An accelerator sensor SN2 which detects an accelerator opening indicative of a stepping-on amount of the accelerator pedal 39 is attached to the accelerator pedal 39.

The PCM 50 may be a controller which is mainly comprised of a microcomputer including a processor (e.g., a central processing unit (CPU)) which performs calculation, memory, such as ROM and RAM, and various kinds of input/output buses. The PCM 50 generally controls the engine 1, the motor 31, and transmission 35. Concretely, the PCM 50 controls the output of the engine 1 and controls the output of the motor 31 via the inverter 32, and also controls the gear ratio of the transmission 35 so that a suitable driving force according to the traveling condition of the vehicle V is transmitted to the driving wheels 37.

### [Engine Structure]

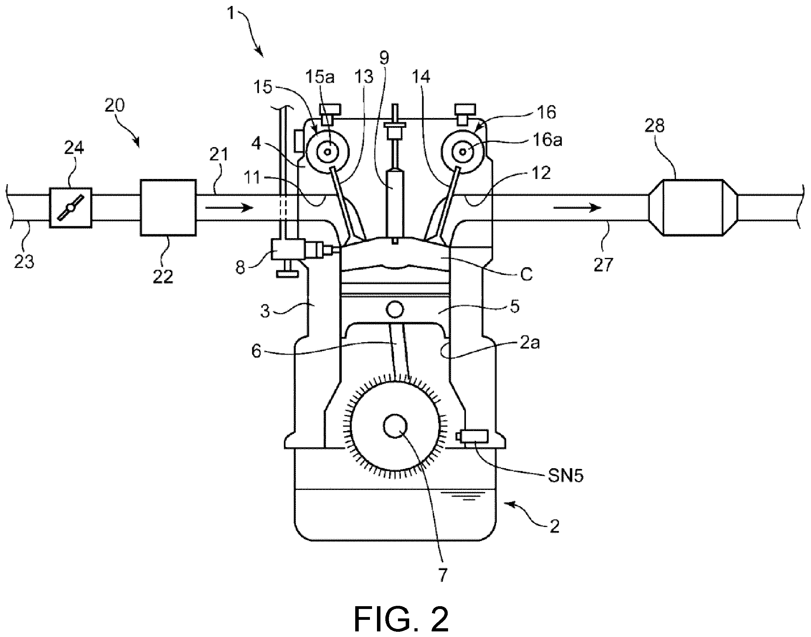

Fig. 2 is an outline cross-sectional view illustrating a structure of the engine 1. The engine 1 may include an engine body 2, an intake passage 20, and an exhaust passage 27.

The engine 2 may be a multiple-cylinder type having a plurality of cylinders 2a. In this embodiment, the engine body 2 may be an in-series six-cylinder type. That is, the engine body 2 may have six cylinders 2a lined up in a direction perpendicular to the drawing sheet of Fig. 2. The engine 2 may include a cylinder block 3 and a cylinder head 4 which form the six cylinders 2a therein, and six pistons 5 which are reciprocatably accommodated inside the respective cylinders 2a. The number of the cylinders is not limited to six, and may be two, three, four or five, for example.

A combustion chamber C may be formed above the piston 5 of each cylinder 2a. Each combustion chamber C is a space formed by a lower surface of the cylinder head 4, a side circumferential surface (cylinder liner) of the cylinder 2a, and an upper surface (crown surface) of the piston 5. Fuel injected from an injector 8 (described later) is supplied to the combustion chamber C. The piston 5 reciprocates in the up-and-down direction in response to expansion energy due to combustion of the fuel supplied to the combustion chamber C (combustion energy).

The crankshaft 7 may be disposed below the piston 5. The crankshaft 7 is an output shaft of the engine 1, and is rotatably supported by a lower part of the cylinder block 3. The crankshaft 7 is coupled to the piston 5 of each cylinder 2a via a crank mechanism including a connecting rod 6, and rotates on the center axis in response to the reciprocating motion (up-and-down motion) of the piston 5.

A crank angle sensor SN5 may be attached to the cylinder block 3. The crank angle sensor SN5 is a sensor for detecting a crank angle which is a rotation angle of the crankshaft 7, and an engine speed which is a rotational speed of the crankshaft 7.

The injector 8 and a spark plug 9 are attached to the cylinder head 4. The injector 8 is a fuel injection valve which injects fuel into the combustion chamber C of each cylinder 2a. The spark plug 9 is a plug which ignites a mixture gas containing fuel injected into the combustion chamber C from the injector 8, and air. A set of one injector 8 and one spark plug 9 may be provided to each cylinder 2a. A plurality of injectors 8 and/or a plurality of spark plugs 9 may be provided to each cylinder 2a.

An intake port 11 and an exhaust port 12 may be formed in the cylinder head 4. The intake port 11 is a port which communicates the combustion chamber C of each cylinder 2a with the intake passage 20. The exhaust port 12 is a port which communicates the combustion chamber C of each cylinder 2a with the exhaust passage 27. An intake valve 13 is provided to the intake port 11 of each cylinder 2a, and an exhaust valve 14 is provided to the exhaust port 12 of each cylinder 2a.

The cylinder head 4 may be provided with an intake valve operating mechanism 15 and an exhaust valve operating mechanism 16. The intake valve operating mechanism 15 and the exhaust valve operating mechanism 16 may be interlocked with the rotation of the crankshaft 7 to open and close the intake valve 13 and the exhaust valve 14 of each cylinder 2a. The intake valve 13 periodically opens and closes an opening of the intake port 11 on the combustion chamber C side as being driven by the intake valve operating mechanism 15, and the exhaust valve 14 periodically opens and closes an opening of the exhaust port 12 on the combustion chamber C side as being driven by the exhaust valve operating mechanism 16.

The intake passage 20 is a passage for introducing intake air into the combustion chamber C of each cylinder 2a. The intake passage 20 is connected to the engine body 2 so that it communicates with the combustion chamber C of each cylinder 2a via the intake port 11. Concretely, the intake passage 20 may have a common intake pipe 23 with a single-pipe shape, a surge tank 22 connected to a downstream end of the common intake pipe 23, and a plurality of (six) independent intake pipes 21 which connect the intake port 11 of each of the plurality of (six) cylinders 2a with the surge tank 22. A throttle valve 24 able to open and/or close is provided to the common intake pipe 23. The throttle valve 24 is opened and/or closed in order to adjust a flow rate of intake air which circulates through the intake passage 20.

The exhaust passage 27 is a passage for discharging exhaust gas discharged from the combustion chamber C of each cylinder 2a to the outside. The exhaust passage 27 is connected to the engine body 2 so that it communicates with the combustion chamber C of each cylinder 2a via the exhaust port 12. A catalyst device 28 for removing hazardous component(s) in exhaust gas may be provided to the exhaust passage 27.

### [Control System]

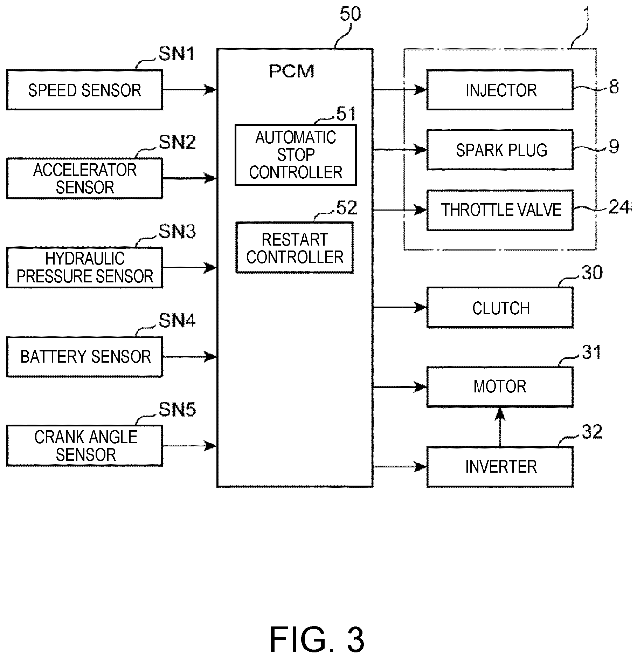

Fig. 3 is a functional block diagram illustrating a control system of the vehicle V As illustrated in this drawing, the PCM 50 is electrically connected with the speed sensor SN1, the accelerator sensor SN2, the hydraulic pressure sensor SN3, the battery sensor SN4, and the crank angle sensor SN5, which are described above. Information detected by each sensor (i.e., information on the traveling speed, the accelerator opening, the clutch hydraulic pressure, the battery SOC, the crank angle, the engine speed, etc.) may be successively inputted into the PCM 50.

The PCM 50 controls traveling of the vehicle V based on the inputted information from the sensors SN1-SN5. That is, the PCM 50 may be electrically connected with the injector 8, the spark plug 9, and the throttle valve 24 of the engine 1, which are described above, and may also be electrically connected with the clutch 30, the motor 31, and the inverter 32, which are described above. The PCM 50 outputs a control signal generated through calculation based on the inputted information from the sensors SN1-SN5 to each of these apparatus.

For example, the PCM 50 may calculate each time a demand torque of the vehicle V which is a torque to be transmitted to the driving wheels 37 based on the traveling speed detected by the speed sensor SN1 and/or the accelerator opening detected by the accelerator sensor SN2. Then, the PCM 50 determines a travel mode of the vehicle V based on the calculated demand torque and the battery SOC detected by the battery sensor SN4. Then, according to the determined travel mode, the PCM 50 controls the engine 1, the clutch 30, and the motor 31 (inverter 32).

Concretely, when the demand torque of the vehicle V is comparatively low and the battery SOC is comparatively high, the motor travel mode may be selected. In this case, the PCM 50 stops the engine 1 and disconnects the clutch 30. Further, the PCM 50 makes the motor 31 output a torque equivalent to the demand torque of the vehicle V to make the vehicle V travel only by the motor 31.

When the demand torque of the vehicle V is comparatively high or when the battery SOC is comparatively low, the engine travel mode may be selected. In this case, the PCM 50 drives the engine 1 (makes it perform combustion), and connects the clutch 30. Further, for example, when the output torque of the engine 1 is not enough for the demand torque of the vehicle V, the PCM 50 may activate the motor 31, and may make the motor 31 output an assist torque which is equivalent to the shortage of the torque. In this case, the PCM 50 controls the engine 1 and the motor 31 so that the total torque of the engine 1 and the motor 31 is equivalent to the demand torque of the vehicle V On the other hand, when the motor 31 is not activated, the PCM 50 may make the engine 1 output the torque equivalent to the demand torque of the vehicle V to make the vehicle V travel only by the engine 1.

As a part of the functional element for realizing the above control, the PCM 50 has an automatic stop controller 51 and a restart controller 52. The automatic stop controller 51 is a module for automatically stopping the engine 1 in association with the change from the engine travel mode to the motor travel mode. The restart controller 52 is a module for restarting the stopped engine 1 in association with the change from the motor travel mode to the engine travel mode. These modules are executed by the processor to perform their respective functions and stored in the memory as software modules.

### [Automatic Stop Control]

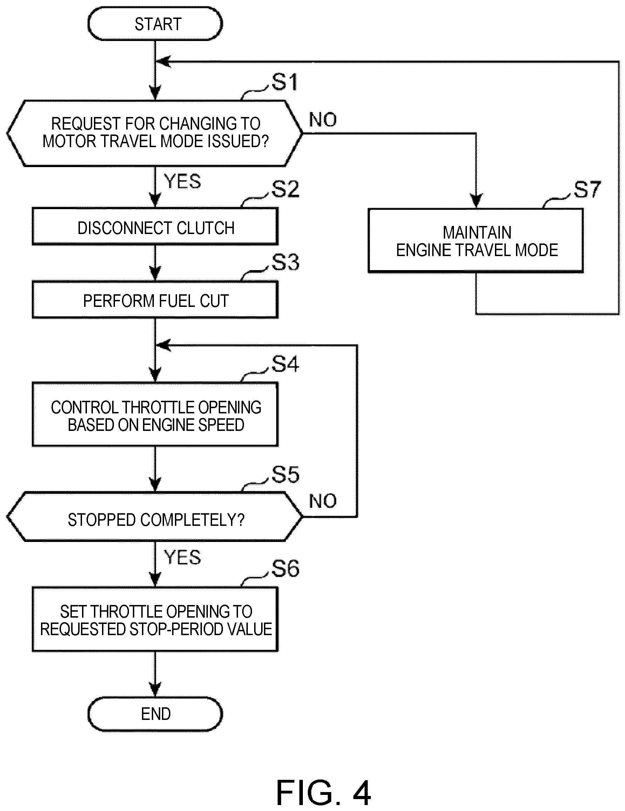

Next, the details of the control when changing from the engine travel mode to the motor travel mode, which is described above (especially, the control for automatically stopping the engine 1 in association with the change (automatic stop control)) are described using a flowchart of Fig. 4. The control illustrated in this drawing is performed while the vehicle V travels in the engine travel mode. That is, as a condition under which this control is performed, the vehicle V is in the engine travel mode.

When the control of Fig. 4 starts, the PCM 50 determines whether a request for changing the travel mode of the vehicle V from the engine travel mode to the motor travel mode is issued (Step S1). That is, while the vehicle V travels in the engine travel mode, the PCM 50 may check condition parameters for determining the travel mode of the vehicle V (for example, the demand torque and the battery SOC) based on the detection values of the speed sensor SN1, the accelerator sensor SN2, and the battery sensor SN4. Then, when the condition parameters are changed to conditions which suit the motor travel mode, the PCM 50 determines that a change request from the engine travel mode to the motor travel mode is issued.

If it is determined to be NO at Step S1, and it is confirmed that there is no change request to the motor travel mode, the PCM 50 may maintain the travel mode of the vehicle V in the engine travel mode (Step S7).

On the other hand, if it is determined to be YES at Step S1, and it is confirmed that the change request to the motor travel mode is issued, the automatic stop controller 51 of the PCM 50 disconnects the clutch 30 to disconnect the engine 1 from the motor 31 (Step S2).

Subsequently, the automatic stop controller 51 performs a fuel cut for suspending fuel supply (fuel injection) to the combustion chamber C from the injector 8 (Step S3). The engine speed begins to decrease in association with stop of combustion by this fuel cut.

Subsequently, the automatic stop controller 51 may control a throttle opening which is an opening of the throttle valve 24 based on the engine speed (Step S4). For example, for a while from the fuel cut, the automatic stop controller 51 reduces the throttle opening to a comparatively small opening (near fully-closed) in order to suppress vibration of the engine 1. Then, when the engine speed decreases to a certain speed (for example, 160 rpm or about 160 rpm) defined beforehand, the automatic stop controller 51 increases the throttle opening. Thus, since the throttle opening is increased slightly before the engine 1 is completely stopped, the pumping loss of the engine 1 decreases, and the piston 5 of the cylinder which reaches the last compression top dead center before the complete stop becomes easier to pass through the compression top dead center. This makes it possible to stop the piston 5 of a stop-period expansion-stroke cylinder which is a cylinder which stops in an expansion stroke, and the piston 5 of a stop-period compression-stroke cylinder which is a cylinder which stops in a compression stroke at positions substantially equally distant from the compression top dead center.

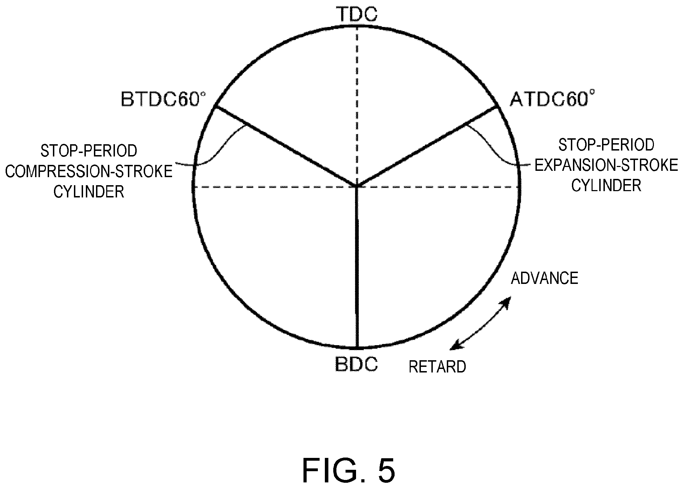

For example, in the case of the six-cylinder engine like this embodiment, a pattern as illustrated in Fig. 5 becomes easy to be obtained as a stop position pattern of the piston 5 of each cylinder 2a, as a result of the above-described control of the throttle valve 24. That is, it is a pattern in which the piston 5 of the stop-period expansion-stroke cylinder is stopped at or near ATDC60°CA which is 60° on the retarding side from a compression top dead center, and the piston 5 of the stop-period compression-stroke cylinder is stopped at or near BTDC60°CA which is 60° on the advancing side from the compression top dead center. Note that the pistons 5 of other cylinders 2a will be stopped near ATDC60°CA (or at ATDC60°CA) which is in the same phase as the stop-period expansion-stroke cylinder, or near BTDC60°CA (or at BTDC60°CA) which is in the same phase as the stop-period compression-stroke cylinder, or near a bottom dead center (BDC) (or at the BDC).

Subsequently, the automatic stop controller 51 may determine whether the engine 1 is completely stopped (i.e., the engine speed is dropped to substantially zero) (Step S5).

If it is determined to be NO at Step S35, and it is confirmed that the engine 1 is not yet completely stopped, the automatic stop controller 51 repeats the control of Step S4.

On the other hand, if it is determined to be YES at Step S4, and it is confirmed that the engine 1 is completely stopped, the automatic stop controller 51 may set the throttle opening to a requested value for the stop-period (Step S6). The requested value for the stop-period may be defined beforehand in consideration of a restart of the engine 1, for example. That is, at Step S6, the automatic stop controller 51 sets the throttle opening to the opening suitable for a restart of the engine 1.

### [Restart Control]

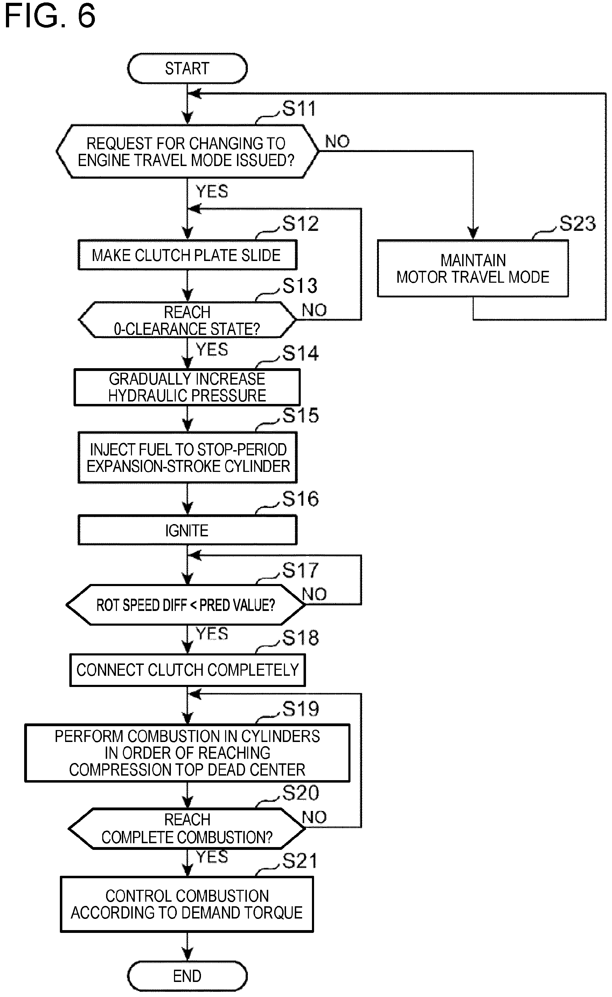

Next, the details of the control when changing from the motor travel mode to the engine travel mode (especially, the control in which the engine 1 is restarted in association with the change (restart control)) are described using a flowchart of Fig. 6. The control illustrated in this drawing is performed while the vehicle V travels in the motor travel mode. That is, as a condition under which this control is performed, the vehicle V is in the motor travel mode.

When the control of Fig. 6 starts, the PCM 50 determines whether a request for changing the travel mode of the vehicle V from the motor travel mode to the engine travel mode is issued (Step S11). That is, the PCM 50 may check condition parameters for determining the travel mode of the vehicle V (for example, the demand torque, the battery SOC, etc.) based on the detection values of the speed sensor SN1, the accelerator sensor SN2, and the battery sensor SN4, while the vehicle V travels in the motor travel mode. Then, when the condition parameters are changed to conditions which suit the engine travel mode, the PCM 50 determines that a change request from the motor travel mode to the engine travel mode is issued.

If it is determined to be NO at Step S11, and it is confirmed that there is no change request to the engine travel mode, the PCM 50 may maintain the travel mode of the vehicle V in the motor travel mode (Step S23). Thus, the stopped state of the engine 1 is continued.

On the other hand, if it is determined to be YES at Step S11, and if it is confirmed that the change request to the engine travel mode is issued, the restart controller 52 of the PCM 50 supplies hydraulic pressure to the clutch 30 in the disconnected state to make the clutch plates 30a slide in the connecting direction (Step S12).

The hydraulic pressure supplied to the clutch 30 at Step S12 (i.e., the clutch hydraulic pressure) may be any pressure as long as it can make the clutch plates 30a slide, and may be smaller than pressure which makes the clutch 30 result in connection (connecting hydraulic pressure).

Subsequently, the restart controller 52 determines whether the clutch 30 becomes in a zero-clearance state (Step S13). The zero-clearance state is a state in which the clearance between the clutch plates 30a becomes substantially zero (i.e., a state where the clutch plates 30a slide to a position at which the clutch plates 30a just become in contact with each other).

The determination of the zero-clearance state is performed based on the detection value of the hydraulic pressure sensor SN3 provided to the clutch 30. For example, when the clutch plates 30a contact mutually, the clutch hydraulic pressure increases accordingly. That is, the clutch hydraulic pressure becomes substantially constant, while the clutch plates 30a slide, but it rises or rises instantly when the clutch plates 30a contact with each other. The restart controller 52 may determine that the clutch 30 becomes in the zero-clearance state, when such behavior of the hydraulic pressure is confirmed based on the detection value of the hydraulic pressure sensor SN3.

If it is determined to be NO at Step S13, and it is confirmed that the slide of the clutch plates 30a has not yet been completed, the restart controller 52 repeats the control of Step S12.

On the other hand, if it is determined to be YES at Step S13, and if it is confirmed that the clutch 30 becomes in the zero-clearance state, the restart controller 52 increases or gradually increases the clutch hydraulic pressure toward a target hydraulic pressure defined beforehand (Step S14).

The target hydraulic pressure is set as a value somewhat lower than the connecting hydraulic pressure which is hydraulic pressure required for fully connecting the clutch 30. By such a gradual increase of the clutch hydraulic pressure toward the target hydraulic pressure, the clutch 30 may transition to a half-connected state. The half-connected state is a state where the clutch 30 is connected by a comparatively weak force at which a torque can be transmitted while permitting relative rotation (slip) between the clutch plates 30a.

In combination with Step S14, the restart controller 52 may make the injector 8 of the stop-period expansion-stroke cylinder inject fuel (Step S15). As described earlier, the stop-period expansion-stroke cylinder is a cylinder which is in expansion stroke, when the engine 1 is stopped by the above-described automatic stop control (Fig. 4).

The restart controller 52 may make the injector 8 of the stop-period expansion-stroke cylinder inject fuel so that first combustion for restart takes place in the stop-period expansion-stroke cylinder. By this fuel injection, the mixture gas containing fuel and air is formed in the combustion chamber C of the stop-period expansion-stroke cylinder.

The fuel injection at Step S15 may be a divided injection in this embodiment. That is, at Step S15, the restart controller 52 may make the injector 8 of the stop-period expansion-stroke cylinder inject a necessary amount of fuel dividedly in a plurality of steps. The number of divisions may be preferred to be 3, for example. The number of divisions is not to be limited to 3, and may be 2 or 4, for example.

Subsequently, the restart controller 52 may make the spark plug 9 of the stop-period expansion-stroke cylinder generate sparks to ignite the above-described mixture gas formed inside the combustion chamber C of this cylinder (Step S16).

Ignition is performed after a predetermined period of time passes from the fuel injection at Step S15. The predetermined period of time is set beforehand as a time required for the injected fuel to be mixed with air to form the mixture gas. Triggered by this ignition, the mixture gas combusts in the stop-period compression-stroke cylinder so that an expansive force caused by the combustion depresses the piston 5 of the stop-period expansion-stroke cylinder. Therefore, the rotational force (torque) is given to the engine 1 so that the engine speed begins to rise.

The ignition at Step S16 may be a multiple ignition in this embodiment. That is, at Step S16, the restart controller 52 makes the spark plug 9 of the stop-period expansion-stroke cylinder perform ignition for a plurality of times. The number of ignitions may be preferred to be 3, for example. In this case, the first ignition is performed after the above-described predetermined period of time passes from the last injection among the plurality of fuel injections at Step S15, and the second ignition is then performed immediately after that. The number of ignitions is not limited to be 3, and may be 2 or 4, for example.

Subsequently, the restart controller 52 may determine whether a rotational speed difference between the output shaft (crankshaft 7) of the engine 1 and the rotation shaft of the motor 31 becomes below a predetermined value defined in advance (Step S17).

If it is determined to be YES at Step S17, and it is confirmed that the above-described rotational speed difference is below the predetermined value, the restart controller 52 may fully connect or engage the clutch 30 (Step S18). That is, the restart controller 52 fully connects the clutch 30 by raising the clutch hydraulic pressure up to the connecting hydraulic pressure which is defined beforehand as a high hydraulic pressure at which the slip of the clutch plates 30a is not permitted or does not occur.

Subsequently, the restart controller 52 may make the cylinders other than the stop-period expansion-stroke cylinder perform combustion sequentially (Step S19). The combustion is performed in the cylinders in order of reaching a compression top dead center. Concretely, the restart controller 52 makes the stop-period compression-stroke cylinder, which is in compression stroke when the engine 1 is stopped, combust near timing when it reaches a compression top dead center, and, after that, similarly makes other cylinders combust near the timing when reaching the compression top dead center.

Subsequently, the restart controller 52 may determine whether the engine 1 reaches complete combustion (Step S20). For example, the restart controller 52 determines that the engine 1 reaches the complete combustion (i.e., the restart of the engine 1 is completed) when the engine speed exceeds a predetermined speed defined in advance.

If it is determined to be NO at Step S20, and it is confirmed that the engine 1 has not yet reached the complete combustion, the restart controller 52 repeats the control of Step S19.

On the other hand, if it is determined to be YES at Step S20, and it is confirmed that the engine 1 has reached the complete combustion, the restart controller 52 may control combustion of the engine 1 according to the demand torque of the vehicle V (Step S21). That is, the restart controller 52 controls combustion of the engine 1 so that the torque obtained by subtracting the output torque of the motor 31 from the demand torque of the vehicle V is outputted from the engine 1.

### [Example Operation]

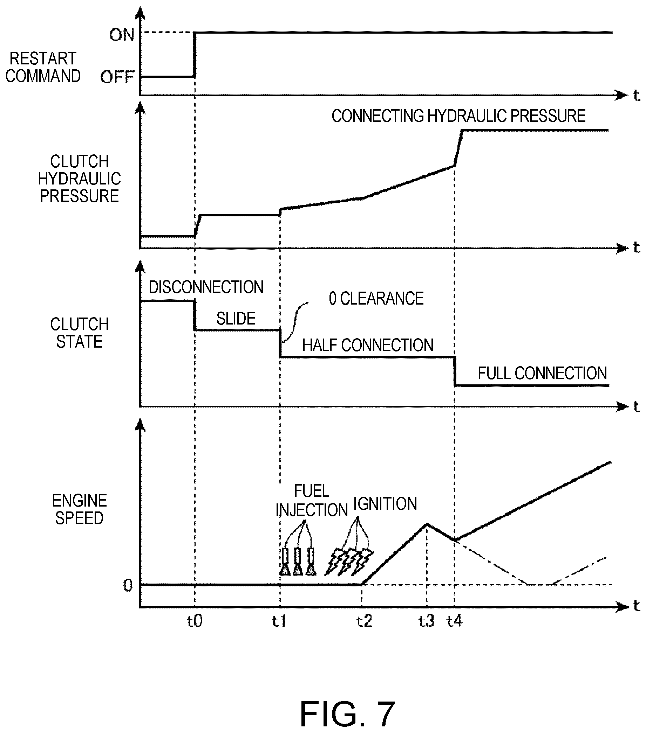

Fig. 7 is a time chart illustrating one example of a time-series change in various properties accompanying the restart control of the engine 1. In this drawing, a timing at which the travel mode of the vehicle V is changed from the engine travel mode to the motor travel mode (in other words, a timing at which a restart command of the engine 1 is issued) is a timing t0. From this timing t0, hydraulic pressure for making the clutch plates 30a slide is applied to the clutch 30. Therefore, the state of the clutch 30 transitions from the disconnected state (or disengaged state) to a state where the clutch plates 30a slide in the connecting direction.

By the slide of the clutch plates 30a, the clutch 30 becomes in the zero-clearance state at a timing t1 which is retarded from the timing t0 so that the clearance between the clutch plates 30a becomes substantially zero. In response to this, from the timing t1, a plurality of (here, 3) fuel injections may be performed into the stop-period expansion-stroke cylinder, and, after that, a plurality of (3) ignitions may also be performed in the stop-period expansion-stroke cylinder. Further, the clutch hydraulic pressure is controlled so that it gradually increases from the timing t1.

By the fuel injection and the ignition described above, the mixture gas combusts inside the stop-period expansion-stroke cylinder. A torque may be given to the engine 1 by an expansive force caused by this combustion depressing the piston 5 of the stop-period expansion-stroke cylinder. Therefore, the engine speed begins to go up at the timing t2.

Further, the clutch 30 transitions to the half-connected state after the timing t1 at which the clutch 30 becomes in the zero-clearance state. The clutch 30 in the half-connected state transmits a torque to the engine 1 from the motor 31 to give a rotational force to the engine 1. The rise of the engine speed from the timing t2 described above may also includes such a rise of the rotation caused by the transmitted torque from the motor 31.

Soon after the engine 1 begins to rotate, the piston 5 of the stop-period compression-stroke cylinder, which is a cylinder which reaches the first compression top dead center after the start of the engine startup, passes through the compression top dead center. By the increase in the rotation resistance accompanying this passing of the compression top dead center, the engine speed starts decreasing in turn at a timing t3.

On the other hand, at a timing t4 which is somewhat later than the timing t3, the clutch hydraulic pressure is raised up to the connecting hydraulic pressure, and the clutch 30 results in the full connection. Therefore, the engine 1 is fully connected to the motor 31 so that the torque from the motor 31 can now be fully transmitted to the engine 1. Then, the engine speed which began to decrease starts to increase again. The engine speed increases continuously even after that, and it reaches a complete combustion engine speed after a certain period of time.

### [Operation and Effects]

As described above, in this embodiment, when starting the engine 1 accompanying the change from the motor travel mode to the engine travel mode, the clutch hydraulic pressure is raised to connect the clutch 30, and the connected state of the clutch 30 is determined based on the detection value of the clutch hydraulic pressure. Then, at the timing when it is confirmed that the clutch 30 is in the zero-clearance state as a result of the determination, fuel is injected into the stop-period expansion-stroke cylinder. According to such a configuration, there is an advantage of improving the acceleration response while reducing the vehicle shock, when changing to the engine travel mode.

That is, in this embodiment, since fuel is injected into the stop-period expansion-stroke cylinder when the clutch 30 becomes in the zero-clearance state (i.e., when the clearance of the clutch plates 30a becomes substantially zero), the clutch 30 can be fully connected within the period when the energy by combustion of the injected fuel rotates the engine 1, and the engine speed can be raised promptly.

Concretely, when fuel is injected into the stop-period expansion-stroke cylinder, combustion of the injected fuel takes place, which is triggered by a subsequent ignition, and the expansive force by the combustion (combustion energy) then depresses the piston of the stop-period expansion-stroke cylinder to raise the engine speed. On the other hand, the clutch 30 in the zero-clearance state results in the full connection, after being in the half-connected state for a while. In other words, there is a lag time after fuel is injected until the fuel actually combusts and the engine 1 actually rotates, and there is also a lag time after the clutch 30 becomes in the zero-clearance state until the clutch 30 results in the full connection. In consideration of the lag times, in this embodiment, when the zero-clearance state is confirmed, fuel is injected at this timing. Thus, it is possible to fully connect the clutch 30 within the period in which the engine 1 is rotated by the combustion energy. Therefore, the torque transmitted to the engine 1 from the motor 31 via the clutch 30 can be superimposed on the torque by the combustion energy so that, as illustrated by a solid-line wave shape in the bottom chart of Fig. 7, the engine speed can be raised promptly. As a result, the period of time required for completing the startup of the engine 1 (complete combustion) can be shortened so that the acceleration response when changing to the engine travel mode can be improved. Further, by fully connecting the clutch 30 during the rotation of the engine 1, a large vehicle shock can be suppressed from being generated accompanying the full connection.

For example, if the timing of the fuel injection is determined regardless of the state of the clutch 30, the fuel injection timing is deviated from the connection timing of the clutch 30 greatly. As a result, as illustrated by a one-dot chain line wave shape in the bottom chart of Fig. 7, the rise of the engine speed by combustion energy and the rise of the engine speed by the torque transmission through the connected clutch 30 may occur at different timings. That is, it is a case where, after the engine which began to rotate in response to the combustion energy stops again, torque transmission via the clutch 30 is finally performed. In this case, since the engine speed is raised by the motor 31 again after it fell to zero, the period of time until the completion of the startup of the engine 1 (complete combustion) may be lengthened, and further, the vehicle shock when connecting the clutch 30 may also increase. On the other hand, in this embodiment, since the clutch 30 is fully connected during rotation of the engine 1 accompanying the combustion energy, the above situations can be effectively avoided so that the acceleration response can be improved while reducing the vehicle shock.

Further, in this embodiment, since the fuel injection into the stop-period expansion-stroke cylinder and the ignition thereof are performed for a plurality of times, respectively, as described above, uncompressed mixture gas which is formed inside the stop-period expansion-stroke cylinder can be combusted without difficulty. That is, by the plurality of fuel injections repeatedly stirring air inside the combustion chamber C, mixing of fuel with air is stimulated. Therefore, the mixture gas in which fuel is fully mixed with air is formed inside the combustion chamber C. Further, by performing the plurality of ignitions to the formed mixture gas, the ignitability of the mixture gas can be improved to combust a great portion of the mixture gas precisely.

### [Modifications]

Although in the above embodiment the present invention is applied to the hybrid vehicle V provided with the six-cylinder engine 1 including the six cylinders, and the motor 31, the present invention is widely applicable to vehicles provided with an engine and a motor which are connected and disconnected via a clutch, without being limited to such a vehicle. For example, the engine provided to the vehicle to which the present invention is applicable may be engines with various numbers of cylinders, such as four-cylinder type and three-cylinder type, without being limited to six-cylinder type.

It should be understood that the embodiments herein are illustrative and not restrictive, since the scope of the invention is defined by the appended claims rather than by the description preceding them.

### DESCRIPTION OF REFERENCE CHARACTERS

- 1: Engine
- 2a: Cylinder
- 8: Injector (Fuel Injection Valve)
- 9: Spark Plug
- 30: Clutch
- 30a: Clutch Plate
- 31: Motor
- 37: Driving Wheel (Wheel)
- 50: PCM (Controller)
- SN3: Hydraulic Pressure Sensor

## Claims

1. A driving system for a vehicle (V), comprising:
an engine (1) including a fuel injection valve (8);
an electric motor (31) coupled to wheels (37);
a hydraulic clutch (30) configured to connect the engine (1) to the motor (31) and/or disconnect the engine (1) from the motor (31);
a hydraulic pressure sensor (SN3) configured to detect a hydraulic pressure of the clutch (30); and
a controller (50) configured to selectively execute any one of a motor travel mode in which the motor (31) is activated and the engine (1) is stopped, and an engine travel mode in which at least the engine (1) is activated,
wherein in a startup of the engine (1) accompanying a change of a travel mode from the motor travel mode to the engine travel mode:
the controller (50) is configured to cause the clutch (30) to transition from a disconnected state to a connected state,
the controller (50) is configured to determine the connected state of the clutch (30) based on the hydraulic pressure detected by the hydraulic pressure sensor (SN3), and
as a result of the determination, when the clutch (30) is confirmed to be in a predetermined connection initial state, the controller (50) is configured to cause the fuel injection valve (8) to inject fuel,
**characterized in that** the connection initial state is a state where a clearance between clutch plates (30a) of the clutch (30) becomes substantially zero.

2. The driving system of claim 1,
wherein the engine (1) further includes a spark plug (9) configured to ignite a mixture gas containing fuel injected from the fuel injection valve (8) and air, and
wherein in a startup of the engine (1), the controller (50) is configured to cause the spark plug (9) to ignite the mixture gas after a predetermined period of time passes from the fuel injection by the fuel injection valve (8).

3. The driving system of claim 2,
wherein the fuel injection valve (8) is one of a plurality of fuel injection valves (8) and the spark plug (9) is one of a plurality of spark plugs (9),
wherein the engine (1) includes a plurality of cylinders (2a), each provided with a respective one of each plurality of fuel injection valves (8) and spark plugs (9), and
wherein in the startup of the engine (1), the controller (50) is configured to cause, in a stop-period expansion-stroke cylinder (2a) which is one of the cylinders (2a) and stopped in expansion stroke, the fuel injection valve (8) to perform the fuel injection and the spark plug (9) to perform ignition first before the other cylinders (2a).

4. The driving system of claim 3, wherein in the stop-period expansion-stroke cylinder (2a), the controller (50) is configured to cause the fuel injection valve (8) to perform a plurality of fuel injections and then cause the spark plug (9) to perform a plurality of ignitions.

5. The driving system of claim 1, wherein a clutch hydraulic pressure lower than a predetermined connecting hydraulic pressure of the clutch (30) is supplied to the clutch (30), and when the clutch hydraulic pressure rises or rises instantly, the controller (50) is configured to determines that the clutch (30) has reach the zero-clearance state.

6. The driving system of claim 5, wherein when the controller (50) determines that the clutch (30) has reached the zero-clearance state, the controller (50) is configured to increase or gradually increase the clutch hydraulic pressure to a target hydraulic pressure lower than the connecting hydraulic pressure.

7. The driving system of claim 6, wherein when a difference between an engine speed and a motor rotational speed is below a predetermined value, the controller (50) is configured to increase the clutch hydraulic pressure to the connecting hydraulic pressure.

8. The driving system of any one of claims 5 to 7, wherein the connecting hydraulic pressure is a hydraulic pressure required for fully connecting or engaging the clutch (30).

9. A vehicle (V) comprising:
the driving system of any one of the preceding claims; and
wheels (37) to which the electric motor (31) is coupled.

10. A method of controlling a driving system of a vehicle (V), the driving system comprising, an engine (1) including a fuel injection valve (8), an electric motor (31) coupled to wheels (37), a hydraulic clutch (30) configured to connect the engine (1) to the motor (31) and/or disconnect the engine (1) from the motor (31), and a hydraulic pressure sensor (SN3) configured to detect a hydraulic pressure of the clutch (30), the method comprising:
selectively executing any one of a motor travel mode in which the motor (31) is activated and the engine (1) is stopped, and an engine travel mode in which at least the engine (1) is activated, wherein in a startup of the engine (1) accompanying a change of a travel mode from the motor travel mode to the engine travel mode;
causing the clutch (30) to transition from a disconnected state to a connected state;
determining the connected state of the clutch (30) based on the hydraulic pressure detected by the hydraulic pressure sensor (SN3); and
as a result of the determination, when the clutch (30) is confirmed to be in a predetermined connection initial state, causing the fuel injection valve (8) to inject fuel, **characterized in that** the connection initial state is a state where a clearance between clutch plates (30a) of the clutch (30) becomes substantially zero.

11. The method of claim 10,
wherein the engine (1) further includes a spark plug (9) configured to ignite a mixture gas containing fuel injected from the fuel injection valve (8) and air, and
wherein the method further comprises, in a startup of the engine (1), causing the spark plug (9) to ignite the mixture gas after a predetermined period of time passes from the fuel injection by the fuel injection valve (8).

12. The method of claim 11,
wherein the fuel injection valve (8) is one of a plurality of fuel injection valves (8) and the spark plug (9) is one of a plurality of spark plugs (9),
wherein the engine (1) includes a plurality of cylinders (2a), each provided with a respective one of each plurality of fuel injection valves (8) and spark plugs (9), and
wherein method further comprises, in the startup of the engine (1), causing, in a stop-period expansion-stroke cylinder (2a) which is one of the cylinders (2a) and stopped in expansion stroke, the fuel injection valve (8) to perform the fuel injection and the spark plug (9) to perform ignition first before the other cylinders (2a).

13. The method of claim 12, wherein method further comprises, in the stop-period expansion-stroke cylinder (2a), causing the fuel injection valve (8) to perform a plurality of fuel injections and then causing the spark plug (9) to perform a plurality of ignitions.

## Patentansprüche

1. Ein Antriebssystem für ein Fahrzeug (V), umfassend:
einen Verbrennungsmotor (1) mit einem Kraftstoffeinspritzventil (8);
einen Elektromotor (31), der mit Rädern (37) gekoppelt ist;
eine hydraulische Kupplung (30), die dazu konfiguriert ist, den Verbrennungsmotor (1) mit dem Elektromotor (31) zu verbinden und/oder den Verbrennungsmotor (1) vom Elektromotor (31) zu trennen;
einen Hydraulikdrucksensor (SN3), der dazu konfiguriert ist, einen Hydraulikdruck der Kupplung (30) zu erfassen; und
eine Steuereinrichtung (50), die dazu konfiguriert ist, wahlweise einen Motorfahrmodus, in dem der Motor (31) aktiviert ist und der Verbrennungsmotor (1) gestoppt ist, oder einen Verbrennungsmotorfahrmodus, in dem zumindest der Verbrennungsmotor (1) aktiviert ist, auszuführen,
wobei bei einem Start des Verbrennungsmotors (1) in Verbindung mit einem Wechsel des Fahrmodus vom Motorfahrmodus zum Verbrennungsmotorfahrmodus:
die Steuereinrichtung (50) dazu konfiguriert ist, zu bewirken, dass die Kupplung (30) von einem getrennten Zustand in einen verbundenen Zustand übergeht,
die Steuereinrichtung (50) dazu konfiguriert ist, den verbundenen Zustand der Kupplung (30) auf der Grundlage des vom Hydraulikdrucksensor (SN3) erfassten Hydraulikdrucks festzustellen, und
als Ergebnis der Feststellung, wenn bestätigt wird, dass sich die Kupplung (30) in einem vorbestimmten Verbindungsanfangszustand befindet, die Steuereinrichtung (50) dazu konfiguriert ist, zu bewirken, dass das Kraftstoffeinspritzventil (8) Kraftstoff einspritzt,
**dadurch gekennzeichnet, dass**
der Verbindungsanfangszustand ein Zustand ist, in dem ein Spiel zwischen Kupplungsscheiben (30a) der Kupplung (30) im Wesentlichen null wird.

2. Das Antriebssystem nach Anspruch 1,
wobei der Verbrennungsmotor (1) ferner eine Zündkerze (9) beinhaltet, die dazu konfiguriert ist, ein Gasgemisch, das vom Kraftstoffeinspritzventil (8) eingespritzten Kraftstoff und Luft enthält, zu entzünden, und
wobei, bei einem Start des Verbrennungsmotors (1), die Steuereinrichtung (50) dazu konfiguriert ist, die Zündkerze (9) zu veranlassen, das Gasgemisch nach Ablauf einer vorbestimmten Zeitspanne seit der Kraftstoffeinspritzung durch das Kraftstoffeinspritzventil (8) zu zünden.

3. Das Antriebssystem nach Anspruch 2,
wobei das Kraftstoffeinspritzventil (8) eines von einer Vielzahl von Kraftstoffeinspritzventilen (8) ist, und die Zündkerze (9) eine von einer Vielzahl von Zündkerzen (9) ist,
wobei der Verbrennungsmotor (1) eine Vielzahl von Zylindern (2a) beinhaltet, die jeweils mit einem entsprechenden Kraftstoffeinspritzventil (8) und einer entsprechenden Zündkerze (9) aus der Vielzahl von Kraftstoffeinspritzventilen (8) und Zündkerzen (9) versehen sind, und
wobei beim Start des Verbrennungsmotors (1) die Steuereinrichtung (50) dazu konfiguriert ist, in einem Zylinder (2a) mit Expansionshub in der Stopp-Phase, der einer der Zylinder (2a) ist und im Expansionshub stillsteht, das Kraftstoffeinspritzventil (8) dazu zu veranlassen, die Kraftstoffeinspritzung durchzuführen, und die Zündkerze (9) dazu zu veranlassen, die Zündung zuerst vor den anderen Zylindern (2a) durchzuführen.

4. Das Antriebssystem nach Anspruch 3, wobei, in dem Zylinder (2a) mit Expansionshub in der Stopp-Phase, die Steuereinrichtung (50) dazu konfiguriert ist, zu bewirken, dass das Kraftstoffeinspritzventil (8) eine Vielzahl von Kraftstoffeinspritzungen durchführt und dann zu bewirken, dass die Zündkerze (9) eine Vielzahl von Zündungen durchführt.

5. Das Antriebssystem nach Anspruch 1, wobei der Kupplung (30) ein Kupplungshydraulikdruck zugeführt wird, der niedriger ist als ein vorbestimmter Verbindungshydraulikdruck der Kupplung (30), und wenn der Kupplungshydraulikdruck ansteigt oder sprunghaft ansteigt, die Steuereinrichtung (50) dazu konfiguriert ist, festzustellen, dass die Kupplung (30) den Nullspielzustand erreicht hat.

6. Das Antriebssystem nach Anspruch 5, wobei, wenn die Steuereinrichtung (50) feststellt, dass die Kupplung (30) den Nullspielzustand erreicht hat, die Steuereinrichtung (50) dazu konfiguriert ist, den Kupplungshydraulikdruck auf einen Zielhydraulikdruck zu erhöhen oder allmählich zu erhöhen, der niedriger ist als der Verbindungshydraulikdruck.

7. Das Antriebssystem nach Anspruch 6, wobei, wenn eine Differenz zwischen einer Verbrennungsmotordrehzahl und einer Elektromotordrehzahl unter einem vorbestimmten Wert liegt, die Steuereinrichtung (50) dazu konfiguriert ist, den Kupplungshydraulikdruck auf den Verbindungshydraulikdruck zu erhöhen.

8. Das Antriebssystem nach irgendeinem der Ansprüche von 5 bis 7, wobei der Verbindungshydraulikdruck ein Hydraulikdruck ist, der zum vollständigen Verbinden oder Einkuppeln der Kupplung (30) erforderlich ist.

9. Ein Fahrzeug (V), umfassend:
das Antriebssystem nach irgendeinem der vorstehenden Ansprüche; und
Räder (37), mit denen der Elektromotor (31) gekoppelt ist.

10. Ein Verfahren zum Steuern eines Antriebssystems eines Fahrzeugs (V), wobei das Antriebssystem Folgendes umfasst: einen Verbrennungsmotor (1) mit einem Kraftstoffeinspritzventil (8), einen Elektromotor (31), der mit Rädern (37) gekoppelt ist, eine hydraulische Kupplung (30), die dazu konfiguriert ist, den Verbrennungsmotor (1) mit dem Elektromotor (31) zu verbinden und/oder den Verbrennungsmotor (1) vom Elektromotor (31) zu trennen, und einen Hydraulikdrucksensor (SN3), der dazu konfiguriert ist, einen Hydraulikdruck der Kupplung (30) zu erfassen, wobei das Verfahren Folgendes umfasst:
selektives Ausführen irgendeines von einem Motorfahrmodus, in dem der Elektromotor (31) aktiviert und der Verbrennungsmotor (1) gestoppt ist, und eines Verbrennungsmotorfahrmodus, in dem zumindest der Verbrennungsmotor (1) aktiviert ist, wobei bei einem Start des Verbrennungsmotors (1) in Verbindung mit einem Wechsel des Fahrmodus vom Motorfahrmodus zum Verbrennungsmotorfahrmodus;
Bewirken, dass die Kupplung (30) von einem getrennten Zustand in einen verbundenen Zustand übergeht,
Feststellen des verbundenen Zustands der Kupplung (30) auf der Grundlage des vom Hydraulikdrucksensor (SN3) erfassten Hydraulikdrucks, und
als Ergebnis der Feststellung, wenn bestätigt wird, dass sich die Kupplung (30) in einem vorbestimmten Verbindungsanfangszustand befindet, Bewirken, dass das Kraftstoffeinspritzventil (8) Kraftstoff einspritzt,
**dadurch gekennzeichnet, dass**
der Verbindungsanfangszustand ein Zustand ist, in dem ein Spiel zwischen Kupplungsscheiben (30a) der Kupplung (30) im Wesentlichen null wird.

11. Das Verfahren nach Anspruch 10,
wobei der Verbrennungsmotor (1) ferner eine Zündkerze (9) beinhaltet, die dazu konfiguriert ist, ein Gasgemisch, das vom Kraftstoffeinspritzventil (8) eingespritzten Kraftstoff und Luft enthält, zu entzünden, und
wobei das Verfahren ferner umfasst, dass bei einem Start des Verbrennungsmotors (1), bewirkt wird, dass die Zündkerze (9) nach Ablauf einer vorbestimmten Zeitspanne seit der Kraftstoffeinspritzung durch das Kraftstoffeinspritzventil (8) das Gasgemisch zündet.

12. Verfahren nach Anspruch 11,
wobei das Kraftstoffeinspritzventil (8) eines von einer Vielzahl von Kraftstoffeinspritzventilen (8) ist, und die Zündkerze (9) eine von einer Vielzahl von Zündkerzen (9) ist,
wobei der Verbrennungsmotor (1) eine Vielzahl von Zylindern (2a) beinhaltet, die jeweils mit einem entsprechenden Kraftstoffeinspritzventil (8) und einer entsprechenden Zündkerze (9) aus der Vielzahl von Kraftstoffeinspritzventilen (8) und Zündkerzen (9) versehen sind, und
wobei das Verfahren ferner umfasst, dass beim Start des Verbrennungsmotors (1) bewirkt wird, dass in einem Zylinder (2a) mit Expansionshub in der Stopp-Phase, der einer der Zylinder (2a) ist und im Expansionshub stillsteht, das Kraftstoffeinspritzventil (8) die Kraftstoffeinspritzung und die Zündkerze (9) die Zündung vor den anderen Zylindern (2a) ausführen.

13. Das Verfahren nach Anspruch 12, wobei das Verfahren ferner umfasst, dass in dem Zylinder (2a) mit Expansionshub in der Stopp-Phase, bewirkt wird, dass das Kraftstoffeinspritzventil (8) eine Vielzahl von Kraftstoffeinspritzungen durchführt und dann bewirkt wird, dass die Zündkerze (9) eine Vielzahl von Zündungen durchführt.

## Revendications

1. Un système d'entraînement pour un véhicule (V), comprenant :
un moteur thermique (1) incluant une soupape d'injection de carburant (8) ;
un moteur électrique (31) couplé à des roues (37) ;
un embrayage hydraulique (30) configuré pour connecter le moteur thermique (1) au moteur électrique (31) et/ou déconnecter le moteur thermique (1) du moteur électrique (31) ;
un capteur de pression hydraulique (SN3) configuré pour détecter une pression hydraulique d'embrayage (30) ; et
un dispositif de commande (50) configuré pour exécuter de manière sélective l'un quelconque parmi un mode de déplacement par moteur électrique dans lequel le moteur électrique (31) est activé et le moteur thermique (1) est arrêté, et un mode de déplacement par moteur thermique dans lequel au moins le moteur thermique (1) est activé,
sachant que, lors d'un démarrage du moteur thermique (1) accompagnant un changement de mode de déplacement du mode de déplacement par moteur électrique au mode de déplacement par moteur thermique :
le dispositif de commande (50) est configuré pour amener l'embrayage (30) à passer d'un état déconnecté à un état connecté,
le dispositif de commande (50) est configuré pour déterminer l'état connecté de l'embrayage (30) sur la base de la pression hydraulique détectée par le capteur de pression hydraulique (SN3), et
en conséquence de la détermination, lorsqu'il est confirmé que l'embrayage (30) se trouve dans un état initial de connexion prédéterminé, le dispositif de commande (50) est configuré pour amener la soupape d'injection de carburant (8) à injecter du carburant,
**caractérisé en ce que**
l'état initial de connexion est un état dans lequel un jeu entre des disques d'embrayage (30a) de l'embrayage (30) devient essentiellement nul.

2. Le système d'entraînement d'après la revendication 1,
sachant que le moteur thermique (1) inclut en outre une bougie d'allumage (9) configurée pour enflammer un mélange gazeux contenant du carburant injecté par la soupape d'injection de carburant (8), et de l'air, et
sachant que, lors du démarrage du moteur thermique (1), le dispositif de commande (50) est configuré pour amener la bougie d'allumage (9) à enflammer le mélange gazeux après qu'une période de temps prédéterminée s'est écoulée depuis l'injection de carburant par la soupape d'injection de carburant (8).

3. Le système d'entraînement d'après la revendication 2,
sachant que la soupape d'injection de carburant (8) est l'une d'une pluralité de soupapes d'injection de carburant (8) et que la bougie d'allumage (9) est l'une d'une pluralité de bougies d'allumage (9),
sachant que le moteur thermique (1) inclut une pluralité de cylindres (2a), chacun étant muni d'une soupape d'injection de carburant (8) et d'une bougie d'allumage (9) respectives parmi chaque pluralité de soupapes d'injection de carburant (8) et de bougies d'allumage (9),
sachant que, lors du démarrage du moteur thermique (1), le dispositif de commande (50) est configuré pour amener, dans un cylindre (2a) en période d'arrêt en course d'expansion, qui est l'un des cylindres (2a) et arrêté en course d'expansion, la soupape d'injection de carburant (8) à effectuer l'injection de carburant et la bougie d'allumage (9) à effectuer l'allumage, avant les autres cylindres (2a).

4. Le système d'entraînement d'après la revendication 3, sachant que, dans le cylindre (2a) en période d'arrêt en course d'expansion, le dispositif de commande (50) est configuré pour amener la soupape d'injection de carburant (8) à effectuer une pluralité d'injections de carburant, puis amener la bougie d'allumage (9) à effectuer une pluralité d'allumages.

5. Le système d'entraînement d'après la revendication 1, sachant qu'une pression hydraulique d'embrayage inférieure à la pression hydraulique de connexion prédéterminée de l'embrayage (30) est fournie à l'embrayage (30), et que lorsque la pression hydraulique d'embrayage augmente ou augmente brusquement, le dispositif de commande (50) est configuré pour déterminer que l'embrayage (30) a atteint l'état de jeu nul

6. Le système d'entraînement d'après la revendication 5, sachant que, lorsque le dispositif de commande (50) détermine que l'embrayage (30) a atteint l'état de jeu nul, le dispositif de commande (50) est configuré pour augmenter ou augmenter progressivement la pression hydraulique d'embrayage jusqu'à une pression hydraulique cible inférieure à la pression hydraulique de connexion.

7. Le système d'entraînement d'après la revendication 6, sachant que, lorsqu'une différence entre le régime du moteur thermique et la vitesse de rotation du moteur électrique est inférieure à une valeur prédéterminée, le dispositif de commande (50) est configuré pour augmenter la pression hydraulique d'embrayage jusqu'à la pression hydraulique de connexion.

8. Le système d'entraînement d'après l'une quelconque des revendications de 5 à 7, sachant que la pression hydraulique de connexion est une pression hydraulique requise pour connecter ou engager complètement l'embrayage (30).

9. Un véhicule (V) comprenant :
le système d'entraînement d'après l'une quelconque des revendications précédentes ; et
des roues (37) auxquelles le moteur électrique (31) est couplé.

10. Un procédé de commande d'un système d'entraînement d'un véhicule (V), le système d'entraînement comprenant un moteur thermique (1) incluant une soupape d'injection de carburant (8), un moteur électrique (31) couplé à des roues (37), un embrayage hydraulique (30) configuré pour connecter le moteur thermique (1) au moteur électrique (31) et/ou déconnecter le moteur thermique (1) du moteur électrique (31), et un capteur de pression hydraulique (SN3) configuré pour détecter une pression hydraulique d'embrayage (30), le procédé comprenant :
exécuter sélectivement l'un quelconque parmi un mode de déplacement par moteur électrique dans lequel le moteur électrique (31) est activé et le moteur thermique (1) est arrêté, et un mode de déplacement par moteur thermique dans lequel au moins le moteur thermique (1) est activé,
sachant que, lors d'un démarrage du moteur thermique (1) accompagnant un changement de mode de déplacement du mode de déplacement par moteur électrique au mode de déplacement par moteur thermique ;
amener l'embrayage (30) à passer d'un état déconnecté à un état connecté ;
déterminer l'état connecté de l'embrayage (30) sur la base de la pression hydraulique détectée par le capteur de pression hydraulique (SN3) ; et
en conséquence de la détermination, lorsqu'il est confirmé que l'embrayage (30) se trouve dans un état initial de connexion prédéterminé, amener la soupape d'injection de carburant (8)à injecter du carburant,
**caractérisé en ce que**
l'état initial de connexion est un état dans lequel un jeu entre des disques d'embrayage (30a) de l'embrayage (30) devient essentiellement nul.

11. Le procédé d'après la revendication 10,
sachant que le moteur thermique (1) inclut en outre une bougie d'allumage (9) configurée pour enflammer un mélange gazeux contenant du carburant injecté par la soupape d'injection de carburant (8), et de l'air, et
sachant que le procédé comprend en outre, lors du démarrage du moteur thermique (1), le fait d'amener la bougie d'allumage (9) à enflammer le mélange gazeux après qu'une période de temps prédéterminée s'est écoulée depuis l'injection de carburant par la soupape d'injection de carburant (8).

12. Le procédé d'après la revendication 11,
sachant que la soupape d'injection de carburant (8) est l'une d'une pluralité de soupapes d'injection de carburant (8) et que la bougie d'allumage (9) est l'une d'une pluralité de bougies d'allumage (9),
sachant que le moteur thermique (1) inclut une pluralité de cylindres (2a), chacun étant muni d'une soupape d'injection de carburant (8) et d'une bougie d'allumage (9) respectives parmi chaque pluralité de soupapes d'injection de carburant (8) et de bougies d'allumage (9), et
sachant que, le procédé comprend en outre, lors du démarrage du moteur thermique (1), le fait d'amener, dans un cylindre (2a) en période d'arrêt en course d'expansion, qui est l'un des cylindres (2a) et arrêté en course d'expansion, la soupape d'injection de carburant (8) à effectuer l'injection de carburant et la bougie d'allumage (9) à effectuer l'allumage, avant les autres cylindres (2a).

13. Le procédé d'après la revendication 12, sachant que le procédé comprend en outre, dans le cylindre (2a) en période d'arrêt en course d'expansion, le fait d'amener la soupape d'injection de carburant (8) à exécuter une pluralité d'injections de carburant, puis d'amener la bougie d'allumage (9) à exécuter une pluralité d'allumages.
